# EUROPEAN PATENT APPLICATION

(11) **EP 4 657 289 A1**
(43) Date of publication of application: **03.12.2025**
(21) Application number: 25172821.8
(22) Date of filing: 28.04.2025
(51) Int. Cl.: G06F 21/44, H04L 9/32, H04L 9/40, G06F 21/79, G06F 21/60

(54) **HOST-MEMORY CERTIFICATE EXCHANGE FOR SECURE ACCESS TO MEMORY STORAGE AND REGISTER SPACE**

(30) Priority: 30.05.2024 US 202418679060
(71) Applicant: INTEL Corporation, Santa Clara, CA 95054 (US)
(72) Inventor: SETHURAMAN, Saravanan, Portland (US); VERGIS, George, Portland (US)
(74) Representative: Rummler, Felix

(57) **Abstract**

A memory subsystem allows the memory controller and the memory to create a trusted communication channel based on a certificate exchange. The memory and memory controller have a key storage to store the certificates. The memory controller can be restricted to only be enabled to access a system data storage array after the trusted communication channel is established.

## Description

### FIELD

Descriptions are generally related to memory systems, and more particular descriptions are related to memory subsystem communication.

### BACKGROUND

Memory throughput is increasingly important in computing systems, especially with systems enabled for AI (artificial intelligence). Increasing memory capacity and memory bandwidth is important to improve memory throughput, however, it also tends to increase power consumption. Increasing the speed of the memory bus can also improve memory throughput, however, it tends to increase the bit error rate. Systems can implement RAS (reliability, availability, and serviceability) features such as error checking and correction (ECC) to compensate for the errors.

Double data rate (DDR) memory, such as DDR5 (DDR version 5), provides high bandwidth and RAS capabilities, but tends to consume a significant amount of power. Lower power memory, such as low power double data rate (LPDDR), e.g., LPDDR 5 (LPDDR version 5), can improve the power consumption, but does not traditionally have the same RAS capabilities of DDR memory.

The host can trigger various test modes or operating modes for the memory to exchange data outside the user data exchanged during normal operation. The communication between the host and the memory, even in the test modes, is visible on the memory subsystem buses, such as the CA (command/address) bus and the DQ (data) bus. Additionally, the mode registers and memory spaces are typically defined by standard, and accessible based on the interfaces in the standard.

### BRIEF DESCRIPTION OF THE DRAWINGS

The following description includes discussion of figures having illustrations given by way of example of an implementation. The drawings should be understood by way of example, and not by way of limitation. As used herein, references to one or more examples are to be understood as describing a particular feature, structure, or characteristic included in at least one implementation of the invention. Phrases such as "in one example" or "in an alternative example" appearing herein provide examples of implementations of the invention, and do not necessarily all refer to the same implementation. However, they are also not necessarily mutually exclusive.
**Figure 1** is a block diagram of an example of a system with dynamic bank sparing.
**Figure 2A** is a block diagram of an example of a system with a secure channel implemented by a sideband signal line.
**Figure 2B** is a block diagram of an example of a system with a secure channel implemented by a longer burst length.
**Figure 3A** is a block diagram of an example of a memory subsystem with an in-band communication and sideband communication.
**Figure 3B** is a representation of a host that can interact with memory systems having different secure keys.
**Figure 4** is a flow diagram of an example of a process for establishing a trusted communication channel with a host.
**Figure 5** is a flow diagram of an example of a process for establishing a trusted communication channel with a memory.
**Figure 6** is a flow diagram of an example of a process for using a sideband channel to establish a trusted communication channel.
**Figure 7** is a block diagram of an example of error checking and correction in a memory subsystem.
**Figure 8** is a block diagram of an example of a memory subsystem in which a trusted communication channel can be implemented.
**Figures 9A-9B** are block diagrams of an example of a CAMM system in which a trusted communication channel can be implemented.
**Figure 10** is a block diagram of an example of a computing system in which a trusted communication channel can be implemented.
**Figure 11** is a block diagram of an example of a multi-node network in which a trusted communication channel can be implemented.

Descriptions of certain details and implementations follow, including non-limiting descriptions of the figures, which may depict some or all examples, and well as other potential implementations.

### DETAILED DESCRIPTION

As described herein, a memory subsystem allows the memory controller and the memory to create a trusted communication channel based on a certificate exchange. The memory and memory controller have a key storage to store the certificates. The certificates can be specific to individual memory vendors, enabling solutions that are vendor specific. Establishing the trusted communication channel can enable the memory controller for access to a system data storage array that is inaccessible without the trusted communication channel is established. The system data storage array can be hidden until validation of the certificates.

The exchange of certificates provides a secured mechanism for the memory and the host, or between the host and the memory hub or the DRAM (dynamic random access memory) device. The certificates represent secured keys used to verify the devices. Exchanging the secured keys during power-on can provide a trusted communication path that will not change dynamically during runtime. The trusted communication path reduces the possibility of hacking during runtime activities.

Providing a trusted communication channel between the memory and the host provides flexibility to the memory subsystem. The trusted communication channel is a secured communication channel that secures the data with encrypted data or with scrambled data. There are many applications available to a system with a trusted communication channel. Examples can include, and are not limited to, securing mode register content, securing the ability to enable and disable special DRAM features, securing additional storage space in the memory, selectively enabling access to ODECC (on-die error correction code) space, securing IO (input/output) configuration setup after training is complete (e.g., termination settings, Vref (voltage reference) settings, DFE (decision feedback equalization) settings), securely reading the serial number by the hub or host, or other application, or a combination. The applications can be limited to be enabled to only after the certificates between the host and the memory are verified. The verification can refer to verifying that the certificates between the host and the memory match.

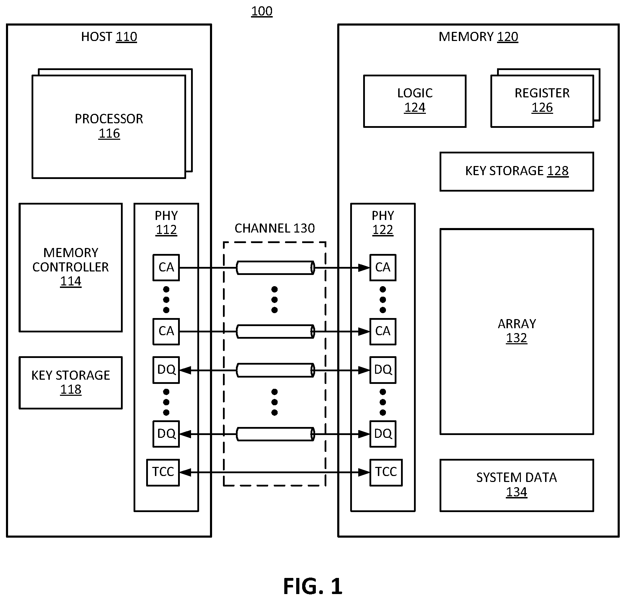

**Figure 1** is a block diagram of an example of a system with dynamic bank sparing. System 100 illustrates host 110 coupled to memory 120 over channel 130. Host 110 represents a host hardware platform of a computing device that uses memory 120. Memory 120 represents system memory, such as DRAM memory, which can be individual devices or a device of a memory module (e.g., a DIMM (dual inline memory module), CAMM (compression attached memory module), or other module).

Host 110 illustrates memory controller 114, which represents a circuit that manages access to memory 120. Memory controller 114 generates and schedules command and address information. Memory controller 114 schedules and provides writes data, as well as receiving read data.

Host 110 includes processing hardware, represented by processor 116, such as a CPU (central processing unit), GPU (graphics processing unit), or other processor device. Memory controller 114 can be a discrete component or can be an iMC (integrated memory controller), which is a circuit integrated on a processor die of processor 116.

Memory 120 includes array 132, which represents a memory array to store user data. User data can refer to the data generated by the operation of applications and processes executed by the processing hardware. In one example, memory 120 includes system data 134, which represents a memory array for system data.

In one example, the system data includes ODECC data. In one example, the system data includes row hammer data. In one example, the system data includes system metadata. In one example, the system data includes memory configuration data. The data array for system data 134 can be part of array 132, such as an address space that is accessible only after establishing a trusted communication channel.

Memory 120 includes logic 124, which represents logic to receive and decode commands from memory controller 114. Memory 120 includes register 126, which can include configuration registers, such as mode registers in a DRAM device. Register 126 can store configuration information and can control different test modes and operating modes of memory 120.

In one example, memory 120 includes key storage 128, which represents a secure key to use for creating trusted communication with host 110. In one example, host 110 includes key storage 118, which represents a secure key to use for creating trusted communication with memory 120. Key storage 118 and key storage 128 store a key or certificate to establish trust by one device verifying the other device's key with its own key. In one example, key storage 118 and key storage 128 is a nonvolatile storage to store certificates. In one example, the nonvolatile storage can be a one-time programmable memory. In one example, the certificate is stored as part of the memory fused space.

Host 110 includes PHY (physical interface) 112, which represents the hardware interconnection from host 110 to memory 120. Memory 120 similarly includes PHY (physical interface) 122, which represents the hardware interconnection from memory 120 to host 110. Channel 130 represents a memory channel between host 110 and memory 120 via the hardware interfaces.

Channel 130 includes a CA (command/address) bus and a DQ (data) bus. In one example, channel 130 includes a TCC (trusted communication channel). In one example, TCC can be considered part of channel 130. In one example, TCC can be considered as a separate channel from channel 130. While not specifically illustrated, channel 130 can include CS (chip select) signal lines for individual memory device selection, CK (clock) signal lines, DQS (data strobe), and various other signal lines for control and feedback signals.

In one example, the TCC is implemented as a separate signal line/pin between host 110 and memory 120. In one example, the TCC is implemented on the DQ bus as an additional burst length to the burst length of the data transfer. For example, depending on the size of the key, the burst length could be extended from BL32 to BL34, BL36, or BL38, or the burst length could be extended from BL16 to BL18 or BL20.

In one example, system 100 establishes the TCC by executing a key exchange after a low power mode (e.g., S0). In one example, the low power mode is one after which host 110 will communicate with memory 120, such as after initializing the CS, CA, and CK signal line connections. In one example, register 126 includes one or more dedicated mode registers not accessible except after verification of a trusted key. For example, if host 110 attempts to access a mode register address of a hidden mode register, memory 120 will return an error. After host 110 and memory 120 verify trust by exchange of certificates, host 110 can make the same attempt to access the mode register address, and memory 120 will execute the access command.

In one example, the mode register address can be specific to a type of memory device or specific to a particular memory vendor. Such a memory address can be undefined with respect to a memory standard or can be RFU (reserved for future use) in the standard.

In one example, host 110 sends a key from key storage 118 to memory 120 through an in-band channel, such as over the CA bus. In one example, the key is sent scrambled. In one example, the key is sent encrypted. In one example, after sending its key, host 110 sends a read command to memory 120 to read its key from key storage 128. Memory 120 receives the read command, identifies host 110 through the received key, and sends its key from key storage 128. In one example, memory 120 sends its key via the TCC.

In one example, system 100 authenticates certificates using a DMTF (distributed management task force) protocol. System 100 can use the CA bus for authentication and can use the CA bus to enable or disable a feature using secured MR writes. In one example, instead of a standard protocol, system 100 can apply a proprietary protocol to perform the authentication of the certificates.

In one example, only after the key verification occurs and the trusted channel is established, host 110 can perform a MRW (mode register write) of a hidden mode register field to enable/disable an operating mode or test mode that can only be accessed in the trusted communication state. In one example, the trusted communication state enables host 110 to access system data 134, which would otherwise be inaccessible.

In one example, host 110 disables a standard operating mode to enable the operating mode of when the trusted channel is established. Thus, for example, host 110 can disable normal memory transactions. After completion of the trusted communication, host 110 can enable regular memory transactions to continue.

In one example, all communications involving an exchange of system data 134 is scrambled or encrypted. Thus, data sent over the TCC (e.g., additional pin or extra BL) can be scrambled or encrypted. In one example, system 100 enables a scramble engine or an encryption engine for use in trusted communication.

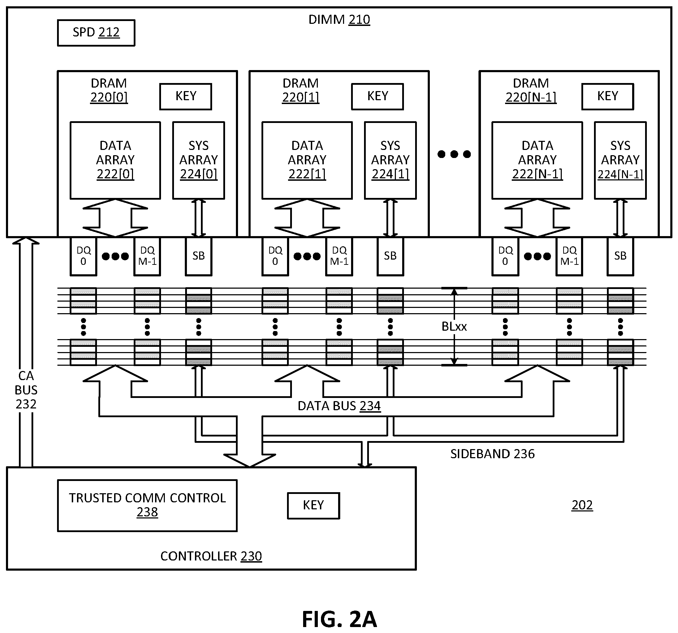

**Figure 2A** is a block diagram of an example of a system with a secure channel implemented by a sideband signal line. System 202 represents a system in accordance with an example of system 100. DIMM 210 represents the memory and controller 230 represents the host. While the memory is illustrated as a DIMM, the DIMM represents any type of memory module that can be used with a group of memory devices.

DIMM 210 includes DRAM 220[0:N-1], collectively DRAMs 220. DRAM 220[0:N-1] includes data array 222[0:N-1], respectively, collectively data arrays 222, and system (SYS) array 224[0:N-1], respectively, collectively system arrays 224. Data arrays 222 represent the memory array to store user data. System arrays 224 represent the memory arrays that store system data accessible only after trusted communication is established.

DRAMs 220 include a key/certificate. Controller 230 also includes a key/certificate. In one example, the keys in controller 230 and DRAMs 220 are the same key or are matching/complementary keys.

Each of DRAMs 220 have M DQ signal lines, illustrated as DQ[0:M-1]. Each DRAM 220 has a DQ interface to data bus 234, where data bus 234 is the collection of all the DQ signal lines. Controller 230 provides commands over CA bus 232. In one example, controller 230 provides key information over CA bus 232 to verify with the DRAMs for trusted communication.

In one example, controller 230 includes trusted communication (COMM) control 238, which represents control logic in controller 230 to manage establishment of the trusted communication channel with DRAMs 220. Trusted communication control 238 enables controller 238 to determine when to establish the trusted communication. Trusted communication control 238 can enable controller 230 to access data from the system arrays in the trusted communication state.

In one example, DIMM 210 and controller 230 are connected with sideband 236. Sideband 236 can connect to additional signal lines (SB or sideband), to provide information to and from the system arrays. In one example, the trusted communication channel includes exchanging data over sideband 236 in parallel or in conjunction with the transmission over the DQ bus. In one example, the transmission over the sideband signal can occur over burst length BLxx, which is the burst length for the data bus.

In one example, system arrays 224 can store ODECC bits or other ECC information. In one example, controller 230 can access the ECC information in the trusted space, enabling improved ECC operation at the host. A memory module is often implemented with multiple data DRAM devices and one or more DRAM devices dedicated to ECC information. With access to ECC information in system arrays 224, in one example, system 202 can remove one or more ECC chips while maintaining the same level of RAS. Reducing the number of DRAM chips can reduce the system cost. In one example, such a system implementation can be executed with LPDDR devices.

In one example, DIMM 210 includes SPD (serial presence detect) 212. SPD 212 can manage the connection to DRAMs 220 on the memory module. In one example, SPD 212 is used to establish the trusted communication channel. In one example, SPD 212 can implement the encryption/decryption engine or the scramble/descramble engine. The SPD typically communicates on I3C (available from MIPI Alliance, Inc.), which is a slower communication interface than either the CA bus or the DQ bus. Use of the SPD can be provided in an SPD control byte, which would not be used until the secure session is provided with the establishment of the trusted communication channel.

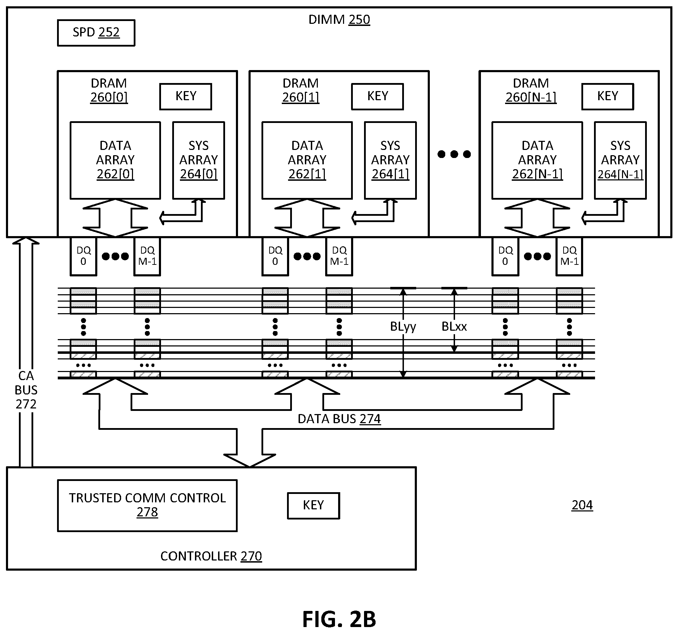

**Figure 2B** is a block diagram of an example of a system with a secure channel implemented by a longer burst length. System 204 represents a system in accordance with an example of system 100. DIMM 250 represents the memory and controller 270 represents the host. While the memory is illustrated as a DIMM, the DIMM represents any type of memory module that can be used with a group of memory devices.

DIMM 250 includes DRAM 260[0:N-1], collectively DRAMs 260. DRAM 260[0:N-1] includes data array 262[0:N-1], respectively, collectively data arrays 262, and system (SYS) array 264[0:N-1], respectively, collectively system arrays 264. Data arrays 262 represent the memory array to store user data. System arrays 264 represent the memory arrays that store system data accessible only after trusted communication is established.

DRAMs 260 include a key/certificate. Controller 270 also includes a key/certificate. In one example, the keys in controller 270 and DRAMs 260 are the same key or are matching/complementary keys.

Each of DRAMs 260 have M DQ signal lines, illustrated as DQ[0:M-1]. Each DRAM 260 has a DQ interface to data bus 274, where data bus 274 is the collection of all the DQ signal lines. Controller 270 provides commands over CA bus 272. In one example, controller 230 provides key information over CA bus 272 to verify with the DRAMs for trusted communication.

In one example, controller 270 includes trusted communication (COMM) control 278, which represents control logic in controller 270 to manage establishment of the trusted communication channel with DRAMs 260. Trusted communication control 278 enables controller 238 to determine when to establish the trusted communication. Trusted communication control 278 can enable controller 270 to access data from the system arrays in the trusted communication state.

In one example, the trusted communication channel includes exchanging data over additional UIs (unit intervals) of the burst length on data bus 274. The additional burst is made in conjunction with the transmission over the DQ bus. As illustrated, burst length BLxx represents the burst length for the data bus to exchange user data. In one example, system 204 has a full burst length BLyy in the secure state for the trusted communication, where BLyy - BLxx is the number of UIs of the burst length used to transmit secured data.

In one example, system arrays 264 can store ODECC bits or other ECC information. In one example, controller 270 can access the ECC information in the trusted space, enabling improved ECC operation at the host. A memory module is often implemented with multiple data DRAM devices and one or more DRAM devices dedicated to ECC information. With access to ECC information in system arrays 264, in one example, system 204 can remove one or more ECC chips while maintaining the same level of RAS. Reducing the number of DRAM chips can reduce the system cost. In one example, such a system implementation can be executed with LPDDR devices.

In one example, DIMM 250 includes SPD (serial presence detect) 252. SPD 252 can manage the connection to DRAMs 260 on the memory module. In one example, SPD 252 is used to establish the trusted communication channel. In one example, SPD 252 can implement the encryption/decryption engine or the scramble/descramble engine. The SPD typically communicates on I3C (available from MIPI Alliance, Inc.), which is a slower communication interface than either the CA bus or the DQ bus. Use of the SPD can be provided in an SPD control byte, which would not be used until the secure session is provided with the establishment of the trusted communication channel.

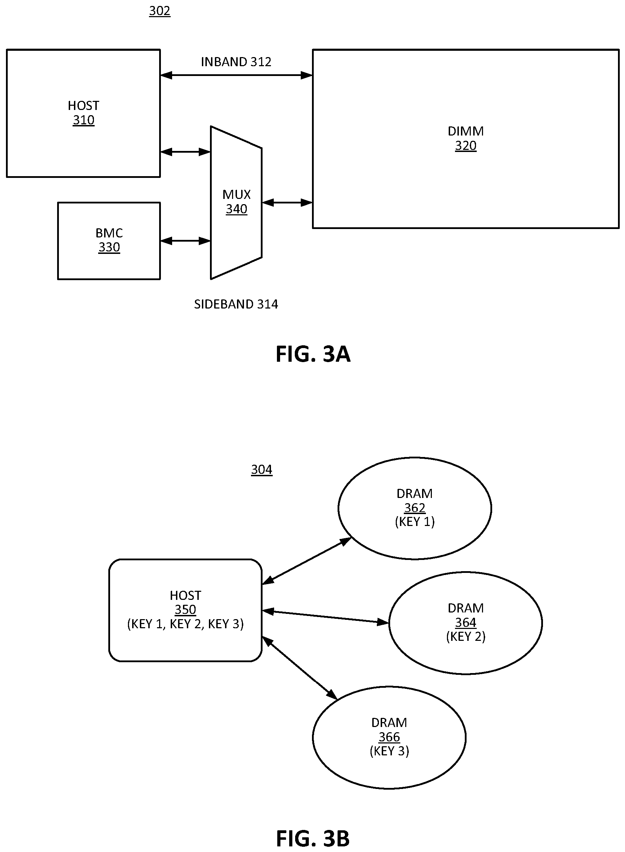

**Figure 3A** is a block diagram of an example of a memory subsystem with an in-band communication and sideband communication. System 302 illustrates a system in accordance with an example of system 100, system 202, or system 204.

System 302 includes host 310 coupled to DIMM 320 via in-band channel 312 and through sideband channel 314. Host 310 represents the host hardware, including processor hardware and a memory controller. DIMM 320 represents the memory module with individual memory devices. It will be understood that instead of a dual inline module, DIMM 320 can represent any type of memory module.

In one example, system 302 includes mux (multiplexer) 340 to select connection of sideband channel 314 between host 310 and BMC (baseboard management controller) 330. BMC 330 monitors and manages the state of system 302. For the monitoring and management tasks, BMC 330 typically communicates out of band from the normal CA bus and DQ bus. For management of DIMM 320, BMC 330 can access the memory through sideband channel 314. In one example, host 310 can access DIMM 320 through the same sideband channel to initiate the trusted communication channel. In one example, host 310 utilizes the sideband channel for the trusted communication.

In one example, host 310 initiates the trusted communication channel through in-band channel 312. In one example, host 310 utilizes in-band channel 312 for the trusted communication. In one example, host 310 utilizes a different sideband signal line (not specifically illustrated in system 302) for the trusted communication.

**Figure 3B** is a representation of a host that can interact with memory systems having different secure keys. System 304 illustrates a system in accordance with an example of system 302. System 304 illustrates the certificate exchange being specific to a type of memory device or being specific to a memory vendor.

Consider that DRAM 362, DRAM 364, and DRAM 366 represent different memory options for a system. DRAM 362 has Key 1, DRAM 364 has Key 2, and DRAM 366 has Key 3. Key 1, Key 2, and Key 3 are different from each other.

In one example, host 350 includes corresponding keys for each of the different DRAM devices. As illustrated, Host 350 includes Key 1, Key 2, and Key 3. When the system is initialized, host 350 can identify the memory attached. Based on identification of the memory in the system, host 350 can select the appropriate key to send to the DRAM to establish the trusted communication channel. Thus, the host can provide different trusted communication with different memory.

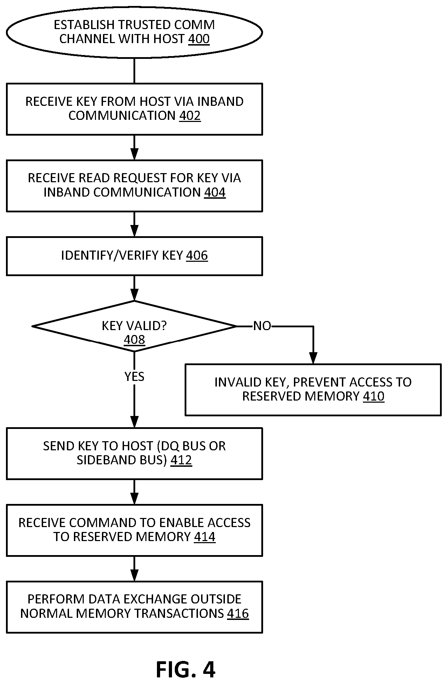

**Figure 4** is a flow diagram of an example of a process for establishing a trusted communication channel with a host. Process 400 represents a process for a memory device to establish a trusted communication channel with the host, in accordance with any system described.

In one example, the memory receives a key from the host (the host key) via an in-band communication channel, at 402. In one example, the host sends one of multiple available keys based on knowing what memory is attached. In one example, the memory receives a read request via the in-band communication channel to send its key (the memory key) to the host, at 404.

The memory can identify/verify the key received from the host, at 406. If the key is not valid (e.g., it does not match the memory device's key), at 408 NO branch, the memory determines that the key is invalid, and prevents access to a reserved memory space and to special features or functionality that would be available in a trusted state, at 410.

If the key is valid, at 408 YES branch, in one example, the memory sends the key via to the host, via the DQ bus or via a sideband communication bus, at 412. After validation at the host, the host can send another command to the memory. The memory receives the command to enable access to the reserved memory space, or the special features or special functionality enabled in the trusted state, at 414. The memory can perform data exchange or perform functions outside of the normal memory transactions, at 416.

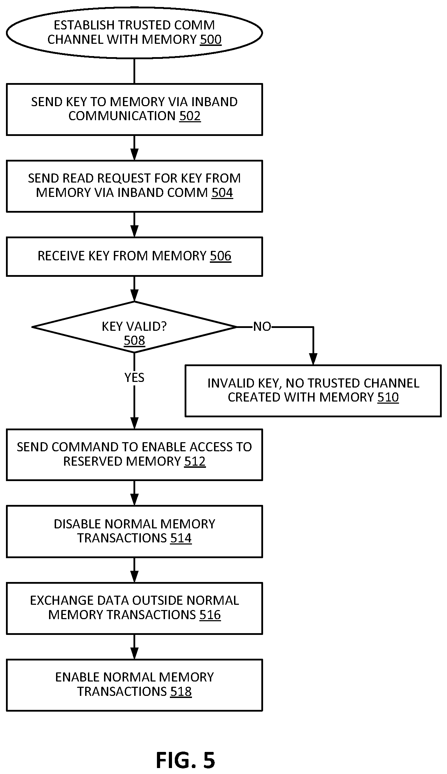

**Figure 5** is a flow diagram of an example of a process for establishing a trusted communication channel with a memory. Process 500 represents a process for a memory controller or host to establish a trusted communication channel with the memory, in accordance with any system described.

In one example, the memory controller sends a key via an in-band communication channel, at 502. In one example, the host sends one of multiple available keys based on knowing what memory is attached. In one example, the memory controller sends a read request via the in-band communication channel to receive the memory's key, at 504.

In one example, the memory controller receives the memory's key via a sideband channel, at 506. If the key is not valid (e.g., it does not match a host key), at 508 NO branch, the memory controller determines that the key is invalid, and there is no trusted channel created with the memory, at 510.

If the key is valid, at 508 YES branch, in one example, the memory controller sends a command to the memory to enable access to the reserved memory space, or the special features or special functionality enabled in the trusted state, at 512. In one example, the memory controller disables normal memory transactions, at 514. The memory and host can perform data exchange or perform functions outside of the normal memory transactions, at 516. In one example, the memory controller enables normal memory transactions after the trusted state is completed, at 518.

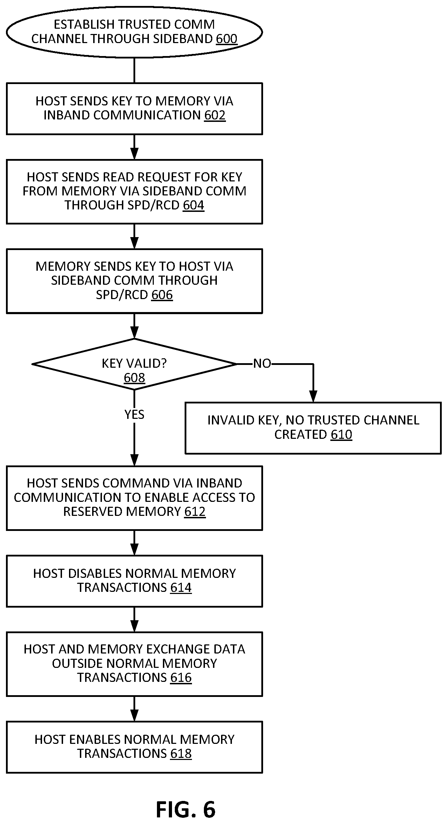

**Figure 6** is a flow diagram of an example of a process for using a sideband channel to establish a trusted communication channel. Process 600 represents a process between a memory controller or host and a memory to establish a trusted communication channel, in accordance with any system described.

In one example, the host sends a key via an in-band communication channel, at 602. In one example, the host sends one of multiple available keys based on knowing what memory is attached. In one example, the host sends a read request via a sideband communication to receive the memory's key, at 604. The sideband communication channel can pass the communication through an SPD (serial presence detect) or an RCD (registering clock driver).

In one example, the memory sends its key via the sideband channel to the host, at 606. Again, the sideband communication channel can pass the communication through the SPD or RCD. If the key is not valid (e.g., it does not match a host key), at 608 NO branch, there is no trusted channel created between the host and the memory, at 610.

If the key is valid, at 608 YES branch, in one example, the host sends a command via in-band communication to the memory to enable access to the reserved memory space, or the special features or special functionality enabled in the trusted state, at 612. In one example, the host disables normal memory transactions, at 614. The memory and host can perform data exchange or perform functions outside of the normal memory transactions, at 616. In one example, the host enables normal memory transactions after the trusted state is completed, at 618.

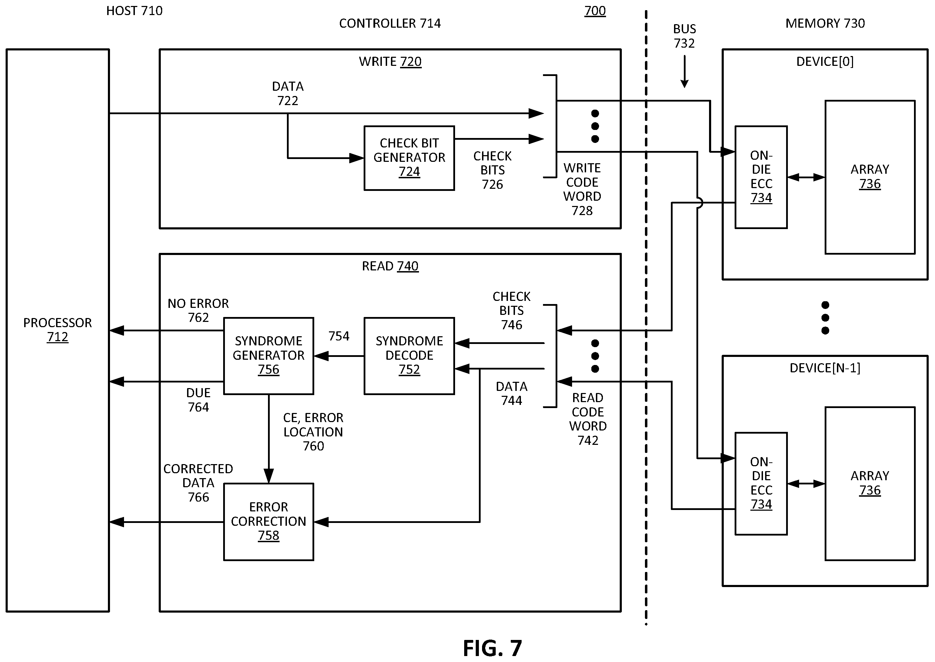

**Figure 7** is a block diagram of an example of error checking and correction in a memory subsystem. System 700 provides an example of ECC circuitry at the system level (e.g., at the host) that can work in conjunction with ODECC at the memory. Host 710 includes controller 714 or equivalent or alternative logic or circuit or component that manages access to memory 730. Controller 714 performs external ECC on data read from memory 730. In one example, memory 730 implements on-die ECC 734 to check and correct data from array 736 prior to sending the data over bus 732 to host 710.

Host 710 includes processor 712 to execute operations that will generate requests for data stored in array 736 of memory 730. In response to a request to write data, controller 714 can generate a write command through write path 720. For a read request, controller 714 receives read data through read path 740.

Write path 720 represents a path for data written from processor 712 to memory 730. Processor 712 provides data 722 for writing to memory 730. In one example, controller 714 generates check bits 726 with check bit generator 724 to store with the data in memory. Check bits 726 can be referred to as ECC bits, and enable error correction for an error that might occur in the writing to and reading from the memory array(s). Data 722 and check bits 726 can be included as write code word in 728, which is written to memory 730, over data bus 732 into array 736.

Read path 740 represents a path for data read from memory 730 to host 710. In one example, at least certain hardware components of write path 720 and read path 740 are the same hardware. In one example, memory 730 fetches the data in response to a read command from host 710. Read code word 742 represents the data and check bits that were stored in array 736. Data 744 and check bits 746 represent the data and check bits of read code word 742. Read code word 742 represents a codeword made up of data from Device[0:(N-1)]. In one example, these correspond, respectively, to data 722 and check bits 726 written in write path 720 to the same address of the read command.

Read path 740 includes syndrome decode 752 to apply H matrix computations on data 744 and check bits 746 to detect errors in the read data. Syndrome decode 752 can generate syndrome 754 for use in generating appropriate error information for the read data. Data 744 can also be forwarded to error correction 758 for correction of a detected error.

In one example, syndrome decode 752 passes syndrome 754 to syndrome generator 756 to generate an error vector. In one example, check bit generator 724 and syndrome generator 756 are fully specified by a corresponding H matrix. In one example, if there are no errors in the read data (e.g., zero syndrome 754), syndrome generator 756 generates a no error signal 762. In one example, if there are multiple errors in the read data (e.g., non-zero syndrome 754 that does not match any of the columns in a corresponding H matrix), syndrome generator 756 generates a DUE (detected uncorrected error) signal 764. DUE signal 764 can indicate a multibit error that was not able to be corrected by the application of ECC.

In one example, if there is a single bit error (e.g., non-zero syndrome 754 that matches one of the columns of a corresponding H matrix), syndrome generator 756 can generate a CE (corrected error) signal with error location 760, which is a corrected error indication to error correction logic 758. Error correction 758 can apply the corrected error to the specified location in data 744 to generate corrected data 766 for output to provide to processor 712.

It will be understood that the host ECC illustrated is very simple, indicating SBE (single bit error) correction. However, it will be understood that the host will generally provide more complex ECC. The illustration of system 700 is merely to illustrate the concept of performing ECC on data received from the memory devices in parallel. The simple ECC illustrated can be implemented individually be each on-die ECC 734 internally for write data sent by the host and for read data before sending to the host.

In one example, for ODECC, the memory devices can allocate additional storage for the ODECC function, such as 8 additional bits of ECC storage for every 128 bits of data. In one example, during a write operation, the DRAM internally computes the ECC and stores the ECC code within a reserved storage space of array 736. During a read operation, the DRAM reads both the actual data and the ECC code. If it detects any discrepancies, it can correct SBEs. In one example, memory 730 can expose the internal ODECC bits after a trusted communication channel has been established, in accordance with any example herein.

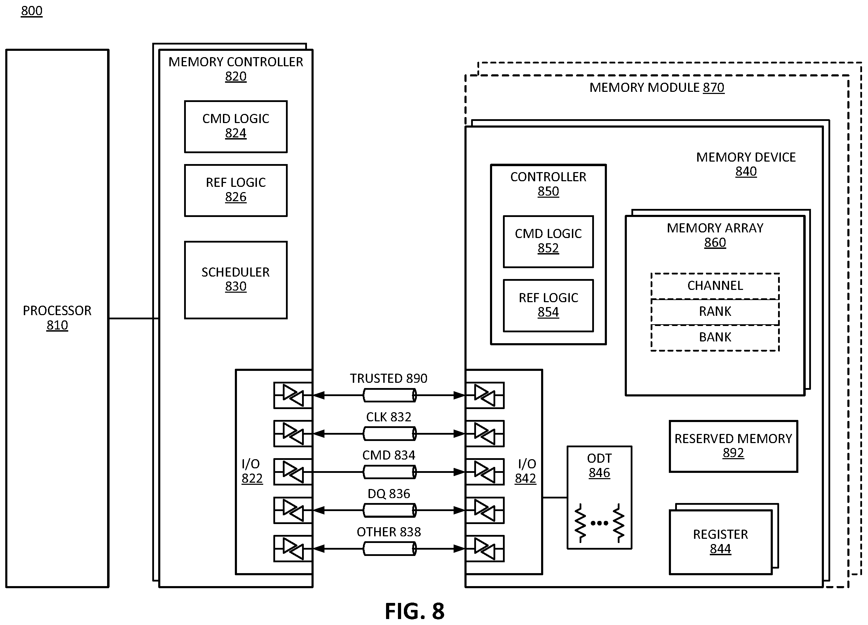

**Figure 8** is a block diagram of an example of a memory subsystem in which a trusted communication channel can be implemented. System 800 includes a processor and elements of a memory subsystem in a computing device.

System 800 represents a system with a memory subsystem in accordance with an example of system 100, an example of system 202, an example of system 204, an example of system 302, or an example of system 304. In one example, system 800 includes reserved memory 892 in memory device 840. Reserved memory 892 represents a reserved memory space for system data. In one example, memory device 840 has controller 850 that supports special functionality. The reserved memory space and the special functionality are inaccessible to memory controller 820 until after a trusted communication channel is created, in accordance with any example herein. Trusted channel 890 represents the trusted communication channel.

Processor 810 represents a processing unit of a computing platform that may execute an operating system (OS) and applications, which can collectively be referred to as the host or the user of the memory. The OS and applications execute operations that result in memory accesses. Processor 810 can include one or more separate processors. Each separate processor can include a single processing unit, a multicore processing unit, or a combination. The processing unit can be a primary processor such as a CPU (central processing unit), a peripheral processor such as a GPU (graphics processing unit), or a combination. Memory accesses may also be initiated by devices such as a network controller or hard disk controller. Such devices can be integrated with the processor in some systems or attached to the processer via a bus (e.g., PCI express), or a combination. System 800 can be implemented as an SOC (system on a chip), or be implemented with standalone components.

Reference to memory devices can apply to different memory types. Memory devices often refers to volatile memory technologies. Volatile memory is memory whose state (and therefore the data stored on it) is indeterminate if power is interrupted to the device. Nonvolatile memory refers to memory whose state is determinate even if power is interrupted to the device. Dynamic volatile memory requires refreshing the data stored in the device to maintain state. One example of dynamic volatile memory includes DRAM (dynamic random-access memory), or some variant such as synchronous DRAM (SDRAM). A memory subsystem as described herein may be compatible with a number of memory technologies, such as DDR4 (double data rate version 4, JESD79-4, originally published in September 2012 by JEDEC (Joint Electron Device Engineering Council, now the JEDEC Solid State Technology Association), LPDDR4 (low power DDR version 4, JESD209-4, originally published by JEDEC in August 2014), WIO2 (Wide I/O 2 (WideIO2), JESD229-2, originally published by JEDEC in August 2014), HBM (high bandwidth memory DRAM, JESD235A, originally published by JEDEC in November 2015), DDR5 (DDR version 5, originally published by JEDEC in July 2020), LPDDR5 (LPDDR version 5, JESD209-5, originally published by JEDEC in February 2019), HBM2 (HBM version 2, JESD235C, originally published by JEDEC in January 2020), HBM3 (HBM version 3, JESD238, originally published by JEDEC in January 2022), DDR6 (DDR version 6, in discussion), GDDR7 (graphics DDR version 7, in discussion), or others or combinations of memory technologies, and technologies based on derivatives or extensions of such specifications.

Memory controller 820 represents one or more memory controller circuits or devices for system 800. In one example, memory controller 820 is on the same semiconductor substrate as processor 810. Memory controller 820 represents control logic that generates memory access commands in response to the execution of operations by processor 810. Memory controller 820 accesses one or more memory devices 840. Memory devices 840 can be DRAM devices in accordance with any referred to above. In one example, memory devices 840 are organized and managed as different channels, where each channel couples to buses and signal lines that couple to multiple memory devices in parallel. Each channel is independently operable. Thus, each channel is independently accessed and controlled, and the timing, data transfer, command and address exchanges, and other operations are separate for each channel. Coupling can refer to an electrical coupling, communicative coupling, physical coupling, or a combination of these. Physical coupling can include direct contact. Electrical coupling includes an interface or interconnection that allows electrical flow between components, or allows signaling between components, or both. Communicative coupling includes connections, including wired or wireless, that enable components to exchange data.

In one example, settings for each channel are controlled by separate mode registers or other register settings. In one example, each memory controller 820 manages a separate memory channel, although system 800 can be configured to have multiple channels managed by a single controller, or to have multiple controllers on a single channel. In one example, memory controller 820 is part of host processor 810, such as logic implemented on the same die or implemented in the same package space as the processor.

Memory controller 820 includes I/O interface logic 822 to couple to a memory bus, such as a memory channel as referred to above. I/O interface logic 822 (as well as I/O interface logic 842 of memory device 840) can include pins, pads, connectors, signal lines, traces, or wires, or other hardware to connect the devices, or a combination of these. I/O interface logic 822 can include a hardware interface. As illustrated, I/O interface logic 822 includes at least drivers/transceivers for signal lines. Commonly, wires within an integrated circuit interface couple with a pad, pin, or connector to interface signal lines or traces or other wires between devices. I/O interface logic 822 can include drivers, receivers, transceivers, or termination, or other circuitry or combinations of circuitry to exchange signals on the signal lines between the devices. The exchange of signals includes at least one of transmit or receive. While shown as coupling I/O 822 from memory controller 820 to I/O 842 of memory device 840, it will be understood that in an implementation of system 800 where groups of memory devices 840 are accessed in parallel, multiple memory devices can include I/O interfaces to the same interface of memory controller 820. In an implementation of system 800 including one or more memory modules 870, I/O 842 can include interface hardware of the memory module in addition to interface hardware on the memory device itself. Other memory controllers 820 will include separate interfaces to other memory devices 840.

The bus between memory controller 820 and memory devices 840 can be implemented as multiple signal lines coupling memory controller 820 to memory devices 840. The bus may typically include at least clock (CLK) 832, command/address (CMD) 834, data (DQ) 836, and zero or more other signal lines 838. In one example, a bus or connection between memory controller 820 and memory can be referred to as a memory bus. In one example, the memory bus is a multi-drop bus. The signal lines for CMD can be referred to as a "C/A bus" (or ADD/CMD bus, or some other designation indicating the transfer of commands (C or CMD) and address (A or ADD) information) and the signal lines for write and read DQ can be referred to as a "data bus." In one example, independent channels have different clock signals, C/A buses, data buses, and other signal lines. Thus, system 800 can be considered to have multiple "buses," in the sense that an independent interface path can be considered a separate bus. It will be understood that in addition to the lines explicitly shown, a bus can include at least one of strobe signaling lines, alert lines, auxiliary lines, or other signal lines, or a combination. It will also be understood that serial bus technologies can be used for the connection between memory controller 820 and memory devices 840. An example of a serial bus technology is 8B10B encoding and transmission of high-speed data with embedded clock over a single differential pair of signals in each direction. In one example, CMD 834 represents signal lines shared in parallel with multiple memory devices. In one example, multiple memory devices share encoding command signal lines of CMD 834, and each has a separate chip select (CS_n) signal line to select individual memory devices.

It will be understood that in the example of system 800, the bus between memory controller 820 and memory devices 840 includes a subsidiary command bus CMD 834 and a subsidiary bus to carry the write and read data, DQ 836. In one example, the data bus can include bidirectional lines for read data and for write/command data. In another example, the subsidiary bus DQ 836 can include unidirectional write signal lines for write and data from the host to memory, and can include unidirectional lines for read data from the memory to the host. In accordance with the chosen memory technology and system design, other signals 838 may accompany a bus or sub bus, such as strobe lines DQS. Based on design of system 800, or implementation if a design supports multiple implementations, the data bus can have more or less bandwidth per memory device 840. For example, the data bus can support memory devices that have either a x4 interface, a x8 interface, a x16 interface, or other interface. The convention "xW," where W is an integer that refers to an interface size or width of the interface of memory device 840, which represents a number of signal lines to exchange data with memory controller 820. The interface size of the memory devices is a controlling factor on how many memory devices can be used concurrently per channel in system 800 or coupled in parallel to the same signal lines. In one example, high bandwidth memory devices, wide interface devices, or stacked memory configurations, or combinations, can enable wider interfaces, such as a x128 interface, a x256 interface, a x512 interface, a x1024 interface, or other data bus interface width.

In one example, memory devices 840 and memory controller 820 exchange data over the data bus in a burst, or a sequence of consecutive data transfers. The burst corresponds to a number of transfer cycles, which is related to a bus frequency. In one example, the transfer cycle can be a whole clock cycle for transfers occurring on a same clock or strobe signal edge (e.g., on the rising edge). In one example, every clock cycle, referring to a cycle of the system clock, is separated into multiple unit intervals (UIs), where each UI is a transfer cycle. For example, double data rate transfers trigger on both edges of the clock signal (e.g., rising and falling). A burst can last for a configured number of UIs, which can be a configuration stored in a register, or triggered on the fly. For example, a sequence of eight consecutive transfer periods can be considered a burst length eight (BL8), and each memory device 840 can transfer data on each UI. Thus, a x8 memory device operating on BL8 can transfer 64 bits of data (8 data signal lines times 8 data bits transferred per line over the burst). It will be understood that this simple example is merely an illustration and is not limiting.

Memory devices 840 represent memory resources for system 800. In one example, each memory device 840 is a separate memory die. In one example, each memory device 840 can interface with multiple (e.g., 2) channels per device or die. Each memory device 840 includes I/O interface logic 842, which has a bandwidth determined by the implementation of the device (e.g., x16 or x8 or some other interface bandwidth). I/O interface logic 842 enables the memory devices to interface with memory controller 820. I/O interface logic 842 can include a hardware interface, and can be in accordance with I/O 822 of memory controller, but at the memory device end. In one example, multiple memory devices 840 are connected in parallel to the same command and data buses. In another example, multiple memory devices 840 are connected in parallel to the same command bus, and are connected to different data buses. For example, system 800 can be configured with multiple memory devices 840 coupled in parallel, with each memory device responding to a command, and accessing memory resources 860 internal to each. For a Write operation, an individual memory device 840 can write a portion of the overall data word, and for a Read operation, an individual memory device 840 can fetch a portion of the overall data word. The remaining bits of the word will be provided or received by other memory devices in parallel.

In one example, memory devices 840 are disposed directly on a motherboard or host system platform (e.g., a PCB (printed circuit board) or substrate on which processor 810 is disposed) of a computing device. In one example, memory devices 840 can be organized into memory modules 870. In one example, memory modules 870 represent dual inline memory modules (DIMMs). In one example, memory modules 870 represent other organization of multiple memory devices to share at least a portion of access or control circuitry, which can be a separate circuit, a separate device, or a separate board from the host system platform. Memory modules 870 can include multiple memory devices 840, and the memory modules can include support for multiple separate channels to the included memory devices disposed on them. In another example, memory devices 840 may be incorporated into the same package as memory controller 820, such as by techniques such as multi-chip-module (MCM), package-on-package, through-silicon via (TSV), or other techniques or combinations. Similarly, in one example, multiple memory devices 840 may be incorporated into memory modules 870, which themselves may be incorporated into the same package as memory controller 820. It will be appreciated that for these and other implementations, memory controller 820 may be part of host processor 810.

Memory devices 840 each include one or more memory arrays 860. Memory array 860 represents addressable memory locations or storage locations for data. Typically, memory array 860 is managed as rows of data, accessed via wordline (rows) and bitline (individual bits within a row) control. Memory array 860 can be organized as separate channels, ranks, and banks of memory. Channels may refer to independent control paths to storage locations within memory devices 840. Ranks may refer to common locations across multiple memory devices (e.g., same row addresses within different devices) in parallel. Banks may refer to sub-arrays of memory locations within a memory device 840. In one example, banks of memory are divided into sub-banks with at least a portion of shared circuitry (e.g., drivers, signal lines, control logic) for the sub-banks, allowing separate addressing and access. It will be understood that channels, ranks, banks, sub-banks, bank groups, or other organizations of the memory locations, and combinations of the organizations, can overlap in their application to physical resources. For example, the same physical memory locations can be accessed over a specific channel as a specific bank, which can also belong to a rank. Thus, the organization of memory resources will be understood in an inclusive, rather than exclusive, manner.

In one example, memory devices 840 include one or more registers 844. Register 844 represents one or more storage devices or storage locations that provide configuration or settings for the operation of the memory device. In one example, register 844 can provide a storage location for memory device 840 to store data for access by memory controller 820 as part of a control or management operation. In one example, register 844 includes one or more Mode Registers. In one example, register 844 includes one or more multipurpose registers. The configuration of locations within register 844 can configure memory device 840 to operate in different "modes," where command information can trigger different operations within memory device 840 based on the mode. Additionally or in the alternative, different modes can also trigger different operation from address information or other signal lines depending on the mode. Settings of register 844 can indicate configuration for I/O settings (e.g., timing, termination or ODT (on-die termination) 846, driver configuration, or other I/O settings).

In one example, memory device 840 includes ODT 846 as part of the interface hardware associated with I/O 842. ODT 846 can be configured as mentioned above, and provide settings for impedance to be applied to the interface to specified signal lines. In one example, ODT 846 is applied to DQ signal lines. In one example, ODT 846 is applied to command signal lines. In one example, ODT 846 is applied to address signal lines. In one example, ODT 846 can be applied to any combination of the preceding. The ODT settings can be changed based on whether a memory device is a selected target of an access operation or a non-target device. ODT 846 settings can affect the timing and reflections of signaling on the terminated lines. Careful control over ODT 846 can enable higher-speed operation with improved matching of applied impedance and loading. ODT 846 can be applied to specific signal lines of I/O interface 842, 822 (for example, ODT for DQ lines or ODT for CA lines), and is not necessarily applied to all signal lines.

Memory device 840 includes controller 850, which represents control logic within the memory device to control internal operations within the memory device. For example, controller 850 decodes commands sent by memory controller 820 and generates internal operations to execute or satisfy the commands. Controller 850 can be referred to as an internal controller, and is separate from memory controller 820 of the host. Controller 850 can determine what mode is selected based on register 844, and configure the internal execution of operations for access to memory resources 860 or other operations based on the selected mode. Controller 850 generates control signals to control the routing of bits within memory device 840 to provide a proper interface for the selected mode and direct a command to the proper memory locations or addresses. Controller 850 includes command logic 852, which can decode command encoding received on command and address signal lines. Thus, command logic 852 can be or include a command decoder. With command logic 852, memory device can identify commands and generate internal operations to execute requested commands.

Referring again to memory controller 820, memory controller 820 includes command (CMD) logic 824, which represents logic or circuitry to generate commands to send to memory devices 840. The generation of the commands can refer to the command prior to scheduling, or the preparation of queued commands ready to be sent. Generally, the signaling in memory subsystems includes address information within or accompanying the command to indicate or select one or more memory locations where the memory devices should execute the command. In response to scheduling of transactions for memory device 840, memory controller 820 can issue commands via I/O 822 to cause memory device 840 to execute the commands. In one example, controller 850 of memory device 840 receives and decodes command and address information received via I/O 842 from memory controller 820. Based on the received command and address information, controller 850 can control the timing of operations of the logic and circuitry within memory device 840 to execute the commands. Controller 850 is responsible for compliance with standards or specifications within memory device 840, such as timing and signaling requirements. Memory controller 820 can implement compliance with standards or specifications by access scheduling and control.

Memory controller 820 includes scheduler 830, which represents logic or circuitry to generate and order transactions to send to memory device 840. From one perspective, the primary function of memory controller 820 could be said to schedule memory access and other transactions to memory device 840. Such scheduling can include generating the transactions themselves to implement the requests for data by processor 810 and to maintain integrity of the data (e.g., such as with commands related to refresh). Transactions can include one or more commands, and result in the transfer of commands or data or both over one or multiple timing cycles such as clock cycles or unit intervals. Transactions can be for access such as read or write or related commands or a combination, and other transactions can include memory management commands for configuration, settings, data integrity, or other commands or a combination.

Memory controller 820 typically includes logic such as scheduler 830 to allow selection and ordering of transactions to improve performance of system 800. Thus, memory controller 820 can select which of the outstanding transactions should be sent to memory device 840 in which order, which is typically achieved with logic much more complex that a simple first-in first-out algorithm. Memory controller 820 manages the transmission of the transactions to memory device 840, and manages the timing associated with the transaction. In one example, transactions have deterministic timing, which can be managed by memory controller 820 and used in determining how to schedule the transactions with scheduler 830.

In one example, memory controller 820 includes refresh (REF) logic 826. Refresh logic 826 can be used for memory resources that are volatile and need to be refreshed to retain a deterministic state. In one example, refresh logic 826 indicates a location for refresh, and a type of refresh to perform. Refresh logic 826 can trigger self-refresh within memory device 840, or execute external refreshes which can be referred to as auto refresh commands) by sending refresh commands, or a combination. In one example, controller 850 within memory device 840 includes refresh logic 854 to apply refresh within memory device 840. In one example, refresh logic 854 generates internal operations to perform refresh in accordance with an external refresh received from memory controller 820. Refresh logic 854 can determine if a refresh is directed to memory device 840, and what memory resources 860 to refresh in response to the command.

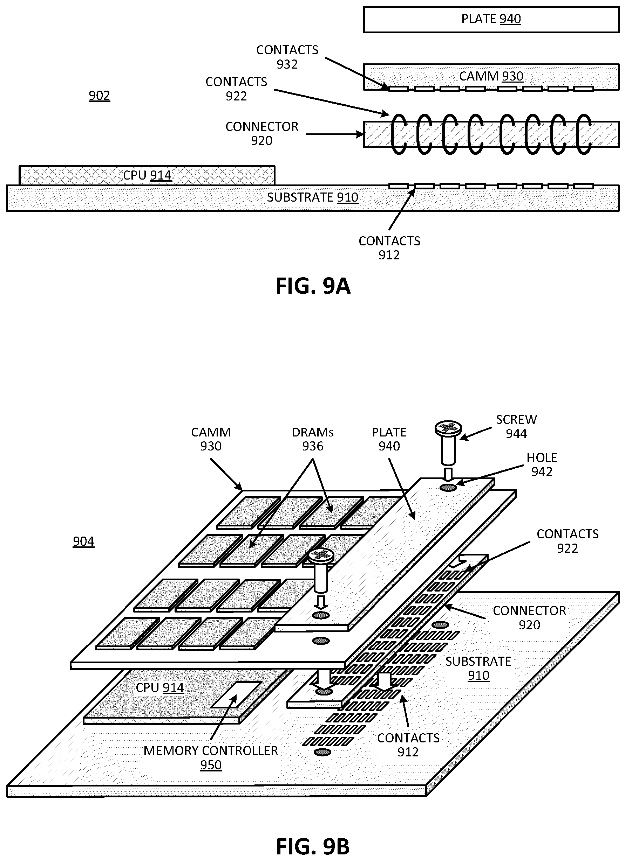

**Figures 9A-9B** are block diagrams of an example of a CAMM system in which a trusted communication channel can be implemented.

Referring to **Figure 9A****,** system 902 includes a memory stack architecture. System 902 represents a system with a memory subsystem in accordance with an example of system 100, an example of system 202, an example of system 204, an example of system 302, or an example of system 304. In one example, the DRAMs of CAMM 930 can perform internal parameter sweeps, in accordance with any example herein.

Substrate 910 illustrates an SOC package substrate or a motherboard or system board. Substrate 910 includes contacts 912, which represent contacts for connecting with memory. CPU 914 represents a processor or central processing unit (CPU) chip or graphics processing unit (GPU) chip to be disposed on substrate 910. CPU 914 performs the computational operations in system 902. In one example, CPU 914 includes multiple cores (not specifically shown), which can generate operations that request data to be read from and written to memory. CPU 914 can include a memory controller to manage access to the memory devices.

Compression-attached memory module (CAMM) 930 represents a module with memory devices, which are not specifically illustrated in system 902. Substrate 910 couples to CAMM 930 and its memory devices through compression mount technology (CMT) connector 920. Connector 920 includes contacts 922, which are compression-based contacts. The compression-based contacts are compressible pins or devices whose shape compresses with the application of pressure on connector 920. In one example, contacts 922 represent C-shaped pins as illustrated. In one example, contacts 922 represent another compressible pin shape, such as a spring-shape, an S-shape, or pins having other shapes that can be compressed.

CAMM 930 includes contacts 932 on a side of the CAMM board that interfaces with connector 920. Contacts 932 connect to memory devices on the CAMM board. Plate 940 represents a plate or housing that provides structure to apply pressure to compress contacts 922 of connector 920.

Referring to **Figure 9B****,** system 904 is a perspective view of a system in accordance with system 902. CAMM 930 is illustrated with memory chips or memory dies, identified as DRAMs 936 on one or both faces of the PCB of CAMM 930. DRAMs 936 are coupled with conductive contacts via conductive traces in or on the PCB, which couples with contacts 932, which in turn couple with contacts 922 of connector 920.

System 904 illustrates holes 942 in plate 940 to receive fasteners, represented by screws 944. There are corresponding holes through CAMM 930, connector 920, and in substrate 910. Screws 944 can compressibly attach the CAMM 930 to substrate 910 via connector 920.

System 904 illustrates memory controller 950, which is not specifically illustrated in system 902. System 700 represents a system with a memory subsystem in accordance with an example of system 100, an example of system 202, an example of system 204, an example of system 302, or an example of system 304. In one example, DRAMs 936 include reserved memory. The reserved memory represents a reserved memory space for system data. In one example, DRAMs 936 support special functionality. The reserved memory space and the special functionality are inaccessible to memory controller 950 until after a trusted communication channel is created, in accordance with any example herein.

In one example, CAMM 930 includes a device (not specifically illustrated) that can perform third party attestation. In one example, the attestation device faces both DRAMs 936 and memory controller 950, to attest their certificates. In one example, memory controller 950 directly sends the certificate to DRAMs 936, which can likewise send their keys to the host.

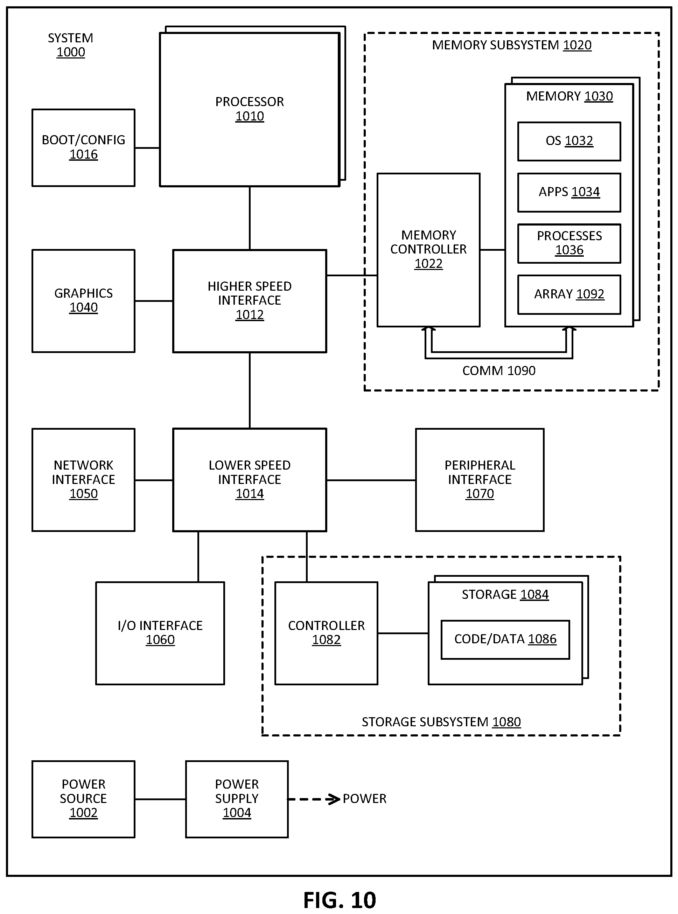

**Figure 10** is a block diagram of an example of a computing system in which a trusted communication channel can be implemented. System 1000 represents a computing device in accordance with any example herein, and can be a laptop computer, a desktop computer, a tablet computer, a server, a gaming or entertainment control system, embedded computing device, or other electronic device.

System 1000 represents a system with a memory subsystem in accordance with an example of system 100, an example of system 202, an example of system 204, an example of system 302, or an example of system 304. In one example, array 1092 of memory 1030 includes a reserved memory space to store system data. In one example, memory 1030 supports special functionality. The reserved memory space and the special functionality are inaccessible to memory controller 1022 until after a trusted communication channel is created, in accordance with any example herein. COMM 1090 represents the trusted communication channel.

System 1000 includes processor 1010 can include any type of microprocessor, central processing unit (CPU), graphics processing unit (GPU), processing core, or other processing hardware, or a combination, to provide processing or execution of instructions for system 1000. Processor 1010 can be a host processor device. Processor 1010 controls the overall operation of system 1000, and can be or include, one or more programmable general-purpose or special-purpose microprocessors, digital signal processors (DSPs), programmable controllers, application specific integrated circuits (ASICs), programmable logic devices (PLDs), or a combination of such devices.

System 1000 includes boot/config 1016, which represents storage to store boot code (e.g., basic input/output system (BIOS)), configuration settings, security hardware (e.g., trusted platform module (TPM)), or other system level hardware that operates outside of a host OS. Boot/config 1016 can include a nonvolatile storage device, such as read-only memory (ROM), flash memory, or other memory devices.

In one example, system 1000 includes interface 1012 coupled to processor 1010, which can represent a higher speed interface or a high throughput interface for system components that need higher bandwidth connections, such as memory subsystem 1020 or graphics interface components 1040. Interface 1012 represents an interface circuit, which can be a standalone component or integrated onto a processor die. Interface 1012 can be integrated as a circuit onto the processor die or integrated as a component on a system on a chip. Where present, graphics interface 1040 interfaces to graphics components for providing a visual display to a user of system 1000. Graphics interface 1040 can be a standalone component or integrated onto the processor die or system on a chip. In one example, graphics interface 1040 can drive a high definition (HD) display or ultra high definition (URD) display that provides an output to a user. In one example, the display can include a touchscreen display. In one example, graphics interface 1040 generates a display based on data stored in memory 1030 or based on operations executed by processor 1010 or both.

Memory subsystem 1020 represents the main memory of system 1000, and provides storage for code to be executed by processor 1010, or data values to be used in executing a routine. Memory subsystem 1020 can include one or more varieties of random-access memory (RAM) such as DRAM, 3DXP (three-dimensional crosspoint), or other memory devices, or a combination of such devices. Memory 1030 stores and hosts, among other things, operating system (OS) 1032 to provide a software platform for execution of instructions in system 1000. Additionally, applications 1034 can execute on the software platform of OS 1032 from memory 1030. Applications 1034 represent programs that have their own operational logic to perform execution of one or more functions. Processes 1036 represent agents or routines that provide auxiliary functions to OS 1032 or one or more applications 1034 or a combination. OS 1032, applications 1034, and processes 1036 provide software logic to provide functions for system 1000. In one example, memory subsystem 1020 includes memory controller 1022, which is a memory controller to generate and issue commands to memory 1030. It will be understood that memory controller 1022 could be a physical part of processor 1010 or a physical part of interface 1012. For example, memory controller 1022 can be an integrated memory controller, integrated onto a circuit with processor 1010, such as integrated onto the processor die or a system on a chip.

While not specifically illustrated, it will be understood that system 1000 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a HyperTransport or industry standard architecture (ISA) bus, a small computer system interface (SCSI) bus, a universal serial bus (USB), or other bus, or a combination.

In one example, system 1000 includes interface 1014, which can be coupled to interface 1012. Interface 1014 can be a lower speed interface than interface 1012. In one example, interface 1014 represents an interface circuit, which can include standalone components and integrated circuitry. In one example, multiple user interface components or peripheral components, or both, couple to interface 1014. Network interface 1050 provides system 1000 the ability to communicate with remote devices (e.g., servers or other computing devices) over one or more networks. Network interface 1060 can represent a network interface circuit (NIC) that enables connection with a remote device over a network connection. The network connection enabled by network interface 1050 can include an Ethernet adapter, wireless interconnection components, cellular network interconnection components, USB (universal serial bus), or other wired or wireless standards-based or proprietary interfaces. Network interface 1050 can exchange data with a remote device, which can include sending data stored in memory or receiving data to be stored in memory.

In one example, system 1000 includes one or more input/output (I/O) interface(s) 1060. I/O interface 1060 can include one or more interface components through which a user interacts with system 1000 (e.g., audio, alphanumeric, tactile/touch, or other interfacing). Peripheral interface 1070 can include any hardware interface not specifically mentioned above. Peripherals refer generally to devices that connect dependently to system 1000. A dependent connection is one where system 1000 provides the software platform or hardware platform or both on which operation executes, and with which a user interacts.

In one example, system 1000 includes storage subsystem 1080 to store data in a nonvolatile manner. In one example, in certain system implementations, at least certain components of storage 1080 can overlap with components of memory subsystem 1020. Storage subsystem 1080 includes storage device(s) 1084, which can be or include any conventional medium for storing large amounts of data in a nonvolatile manner, such as one or more magnetic, solid state, NAND, 3DXP, or optical based disks, or a combination. Storage 1084 holds code or instructions and data 1086 in a persistent state (i.e., the value is retained despite interruption of power to system 1000). Storage 1084 can be generically considered to be a "memory," although memory 1030 is typically the executing or operating memory to provide instructions to processor 1010. Whereas storage 1084 is nonvolatile, memory 1030 can include volatile memory (i.e., the value or state of the data is indeterminate if power is interrupted to system 1000). In one example, storage subsystem 1080 includes controller 1082 to interface with storage 1084. In one example controller 1082 is a physical part of interface 1014 or processor 1010, or can include circuits or logic in both processor 1010 and interface 1014.

Power source 1002 provides power to the components of system 1000. More specifically, power source 1002 typically interfaces to one or multiple power supplies 1004 in system 1000 to provide power to the components of system 1000. In one example, power supply 1004 includes an AC to DC (alternating current to direct current) adapter to plug into a wall outlet. Such AC power can be renewable energy (e.g., solar power) power source 1002. In one example, power source 1002 includes a DC power source, such as an external AC to DC converter. In one example, power source 1002 or power supply 1004 includes wireless charging hardware to charge via proximity to a charging field. In one example, power source 1002 can include an internal battery or fuel cell source.

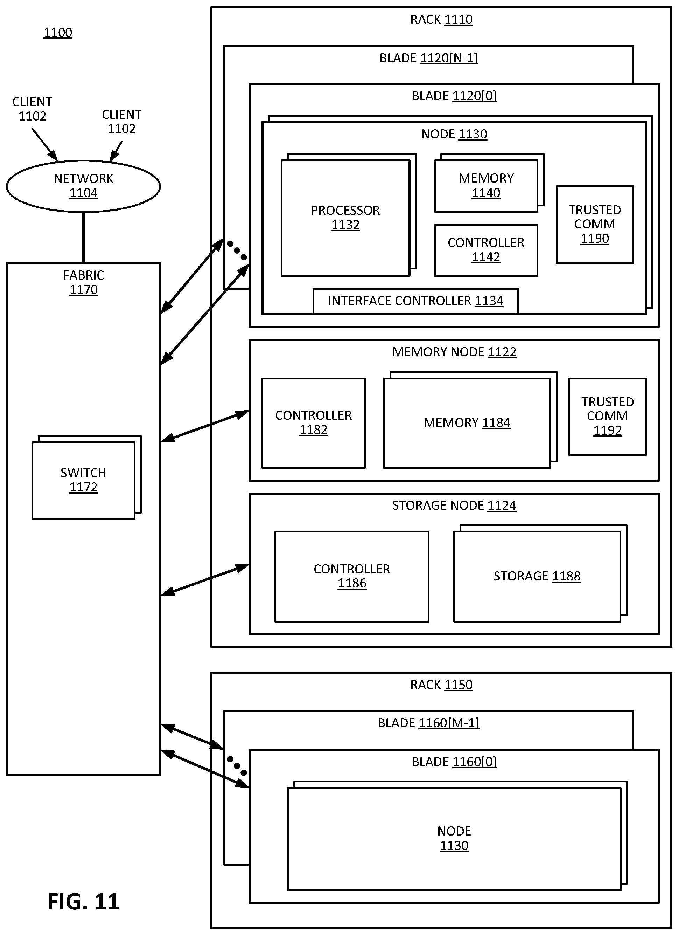

**Figure 11** is a block diagram of an example of a multi-node network in which a trusted communication channel can be implemented. System 1100 represents a network of nodes that can apply adaptive ECC. In one example, system 1100 represents a data center. In one example, system 1100 represents a server farm. In one example, system 1100 represents a data cloud or a processing cloud.

In one example, node 1130 represents a system with a memory subsystem in accordance with an example of system 100, an example of system 202, an example of system 204, an example of system 302, or an example of system 304. In one example, memory 1140 includes a reserved memory space to store system data. In one example, memory 1140 supports special functionality. The reserved memory space and the special functionality are inaccessible to controller 1142 until after a trusted communication channel is created, in accordance with any example herein. Trusted comm 1190 represents the trusted communication channel. In one example, memory node 1122 can similarly provide trusted comm 1192 between memory 1184 and controller 1182.

One or more clients 1102 make requests over network 1104 to system 1100. Network 1104 represents one or more local networks, or wide area networks, or a combination. Clients 1102 can be human or machine clients, which generate requests for the execution of operations by system 1100. System 1100 executes applications or data computation tasks requested by clients 1102.

In one example, system 1100 includes one or more racks, which represent structural and interconnect resources to house and interconnect multiple computation nodes. In one example, rack 1110 includes multiple nodes 1130. In one example, rack 1110 hosts multiple blade components, blade 1120[0], ..., blade 1120[N-1], collectively blades 1120. Hosting refers to providing power, structural or mechanical support, and interconnection. Blades 1120 can refer to computing resources on printed circuit boards (PCBs), where a PCB houses the hardware components for one or more nodes 1130. In one example, blades 1120 do not include a chassis or housing or other "box" other than that provided by rack 1110. In one example, blades 1120 include housing with exposed connector to connect into rack 1110. In one example, system 1100 does not include rack 1110, and each blade 1120 includes a chassis or housing that can stack or otherwise reside in close proximity to other blades and allow interconnection of nodes 1130.

System 1100 includes fabric 1170, which represents one or more interconnectors for nodes 1130. In one example, fabric 1170 includes multiple switches 1172 or routers or other hardware to route signals among nodes 1130. Additionally, fabric 1170 can couple system 1100 to network 1104 for access by clients 1102. In addition to routing equipment, fabric 1170 can be considered to include the cables or ports or other hardware equipment to couple nodes 1130 together. In one example, fabric 1170 has one or more associated protocols to manage the routing of signals through system 1100. In one example, the protocol or protocols is at least partly dependent on the hardware equipment used in system 1100.

As illustrated, rack 1110 includes N blades 1120. In one example, in addition to rack 1110, system 1100 includes rack 1150. As illustrated, rack 1150 includes M blade components, blade 1160[0], ..., blade 1160[M-1], collectively blades 1160. M is not necessarily the same as N; thus, it will be understood that various different hardware equipment components could be used, and coupled together into system 1100 over fabric 1170. Blades 1160 can be the same or similar to blades 1120. Nodes 1130 can be any type of node and are not necessarily all the same type of node. System 1100 is not limited to being homogenous, nor is it limited to not being homogenous.

The nodes in system 1100 can include compute nodes, memory nodes, storage nodes, accelerator nodes, or other nodes. Rack 1110 is represented with memory node 1122 and storage node 1124, which represent shared system memory resources, and shared persistent storage, respectively. One or more nodes of rack 1150 can be a memory node or a storage node.

Nodes 1130 represent examples of compute nodes. For simplicity, only the compute node in blade 1120[0] is illustrated in detail. However, other nodes in system 1100 can be the same or similar. At least some nodes 1130 are computation nodes, with processor (proc) 1132 and memory 1140. A computation node refers to a node with processing resources (e.g., one or more processors) that executes an operating system and can receive and process one or more tasks. In one example, at least some nodes 1130 are server nodes with a server as processing resources represented by processor 1132 and memory 1140.

Memory node 1122 represents an example of a memory node, with system memory external to the compute nodes. Memory nodes can include controller 1182, which represents a processor on the node to manage access to the memory. The memory nodes include memory 1184 as memory resources to be shared among multiple compute nodes.

Storage node 1124 represents an example of a storage server, which refers to a node with more storage resources than a computation node, and rather than having processors for the execution of tasks, a storage server includes processing resources to manage access to the storage nodes within the storage server. Storage nodes can include controller 1186 to manage access to the storage 1188 of the storage node.

In one example, node 1130 includes interface controller 1134, which represents logic to control access by node 1130 to fabric 1170. The logic can include hardware resources to interconnect to the physical interconnection hardware. The logic can include software or firmware logic to manage the interconnection. In one example, interface controller 1134 is or includes a host fabric interface, which can be a fabric interface in accordance with any example described herein. The interface controllers for memory node 1122 and storage node 1124 are not explicitly shown.

Processor 1132 can include one or more separate processors. Each separate processor can include a single processing unit, a multicore processing unit, or a combination. The processing unit can be a primary processor such as a CPU (central processing unit), a peripheral processor such as a GPU (graphics processing unit), or a combination. Memory 1140 can be or include memory devices represented by memory 1140 and a memory controller represented by controller 1142.

In one aspect, a first memory device includes: a first memory array to store user data; a second memory array to store system data; and a key storage to store a certificate, wherein the memory device is to establish a trusted communication channel with an associated memory controller based on the certificate, wherein the memory controller can access the second memory array only after establishment of the trusted communication channel.

In one example of the first memory device, the trusted communication channel comprises a secured communication channel in conjunction with communication over a data bus. In accordance with any preceding example of the first memory device, in one example, the secured communication channel comprises encrypted data. In accordance with any preceding example of the first memory device, in one example, the secured communication channel comprises scrambled data. In accordance with any preceding example of the first memory device, in one example, the communication in conjunction with communication over the data bus comprises data sent over the data bus during additional unit intervals (UIs) of a burst length. In accordance with any preceding example of the first memory device, in one example, the communication in conjunction with communication over the data bus comprises data sent over a signal line in addition to signal lines of the data bus. In accordance with any preceding example of the first memory device, in one example, the system data comprises on die error correction coding (ODECC) data. In accordance with any preceding example of the first memory device, in one example, the system data comprises row hammer data. In accordance with any preceding example of the first memory device, in one example, the system data comprises system metadata.

In one aspect, a first memory controller includes: a hardware interface to a data bus to couple to a memory device; and a key storage to store a certificate, wherein the memory controller is to establish a trusted communication channel with the memory device based on the certificate, wherein the memory controller can access a memory array of the memory device only after establishment of the trusted communication channel, wherein the memory array is to store system data.

In one example of the first memory controller, the trusted communication channel comprises a secured communication channel in conjunction with communication over a data bus. In accordance with any preceding example of the first memory controller, in one example, the secured communication channel comprises encrypted data or scrambled data. In accordance with any preceding example of the first memory controller, in one example, the communication in conjunction with communication over the data bus comprises data sent over the data bus during additional unit intervals (UIs) of a burst length. In accordance with any preceding example of the first memory controller, in one example, the communication in conjunction with communication over the data bus comprises data sent over a signal line in addition to signal lines of the data bus. In accordance with any preceding example of the first memory controller, in one example, the system data comprises on die error correction coding (ODECC) data. In accordance with any preceding example of the first memory controller, in one example, the system data comprises row hammer data. In accordance with any preceding example of the first memory controller, in one example, the system data comprises system metadata.

In one aspect, a first method for memory access includes: receiving a host key at a memory device from a memory controller over a command/address (CA) bus; receiving a read command to read a memory key from the memory device; sending the memory key to the memory controller; and establishing a trusted communication channel between the memory device and the memory controller if there is a match between the memory key and the host key, wherein the memory controller can access a memory array of the memory device only after establishment of the trusted communication channel, wherein the memory array is to store system data.

In one example of the first method, the trusted communication channel comprises a secured communication channel of encrypted data or scrambled data. In accordance with any preceding example of the first method, in one example, the trusted communication channel comprises a secured communication channel of data sent during additional unit intervals (UIs) of a burst length over a data bus between the memory controller and the memory device. In accordance with any preceding example of the first method, in one example, the trusted communication channel comprises a secured communication channel of data sent over a signal line in addition to signal lines of a data bus between the memory controller and the memory device. In accordance with any preceding example of the first method, in one example, the system data comprises on die error correction coding (ODECC) data. In accordance with any preceding example of the first method, in one example, the system data comprises row hammer data. In accordance with any preceding example of the first method, in one example, the system data comprises system metadata.

In one aspect, a second memory device includes: a first memory array to store user data; and a key storage to store a certificate, wherein the memory device is to establish a trusted communication channel with an associated memory controller based on the certificate, wherein the memory controller can access a specific memory device capability only after establishment of the trusted communication channel.

In one example of the second memory device, the trusted communication channel comprises a secured communication channel in conjunction with communication over a data bus. In accordance with any preceding example of the second memory device, in one example, the secured communication channel comprises encrypted data. In accordance with any preceding example of the second memory device, in one example, the secured communication channel comprises scrambled data. In accordance with any preceding example of the second memory device, in one example, the communication in conjunction with communication over the data bus comprises data sent over the data bus during additional unit intervals (UIs) of a burst length. In accordance with any preceding example of the second memory device, in one example, the communication in conjunction with communication over the data bus comprises data sent over a signal line in addition to signal lines of the data bus. In accordance with any preceding example of the second memory device, in one example, the specific memory device capability comprises a capability accessible through a mode register field only accessible after establishment of the trusted communication channel.

In one aspect, a second memory controller includes: a hardware interface to a data bus to couple to a memory device; and a key storage to store a certificate, wherein the memory controller is to establish a trusted communication channel with the memory device based on the certificate, wherein the memory controller can access a specific memory device capability only after establishment of the trusted communication channel.

In one example of the second memory controller, the trusted communication channel comprises a secured communication channel in conjunction with communication over a data bus. In accordance with one example of the second memory controller, in one example, the secured communication channel comprises encrypted data or scrambled data. In accordance with one example of the second memory controller, in one example, the communication in conjunction with communication over the data bus comprises data sent over the data bus during additional unit intervals (UIs) of a burst length. In accordance with one example of the second memory controller, in one example, the communication in conjunction with communication over the data bus comprises data sent over a signal line in addition to signal lines of the data bus. In accordance with one example of the second memory controller, in one example, the specific memory device capability comprises a capability accessible through a mode register field only accessible after establishment of the trusted communication channel.

In one aspect, a second method for memory access includes: receiving a host key at a memory device from a memory controller over a command/address (CA) bus; receiving a read command to read a memory key from the memory device; sending the memory key to the memory controller; and establishing a trusted communication channel between the memory device and the memory controller if there is a match between the memory key and the host key, wherein the memory controller can access a specific memory device capability only after establishment of the trusted communication channel.

In one example of the second method, the trusted communication channel comprises a secured communication channel of encrypted data or scrambled data. In accordance with example of the second method, in one example, the trusted communication channel comprises a secured communication channel of data sent during additional unit intervals (UIs) of a burst length over a data bus between the memory controller and the memory device. In accordance with example of the second method, in one example, the trusted communication channel comprises a secured communication channel of data sent over a signal line in addition to signal lines of a data bus between the memory controller and the memory device. In accordance with example of the second method, in one example, the specific memory device capability comprises a capability accessible through a mode register field only accessible after establishment of the trusted communication channel.

Flow diagrams as illustrated herein provide examples of sequences of various process actions. The flow diagrams can indicate operations to be executed by a software or firmware routine, as well as physical operations. A flow diagram can illustrate an example of the implementation of states of a finite state machine (FSM), which can be implemented in hardware and/or software. Although shown in a particular sequence or order, unless otherwise specified, the order of the actions can be modified. Thus, the illustrated diagrams should be understood only as examples, and the process can be performed in a different order, and some actions can be performed in parallel. Additionally, one or more actions can be omitted; thus, not all implementations will perform all actions.

To the extent various operations or functions are described herein, they can be described or defined as software code, instructions, configuration, and/or data. The content can be directly executable ("object" or "executable" form), source code, or difference code ("delta" or "patch" code). The software content of what is described herein can be provided via an article of manufacture with the content stored thereon, or via a method of operating a communication interface to send data via the communication interface. A machine readable storage medium can cause a machine to perform the functions or operations described, and includes any mechanism that stores information in a form accessible by a machine (e.g., computing device, electronic system, etc.), such as recordable/non-recordable media (e.g., read only memory (ROM), random access memory (RAM), magnetic disk storage media, optical storage media, flash memory devices, etc.). A communication interface includes any mechanism that interfaces to any of a hardwired, wireless, optical, etc., medium to communicate to another device, such as a memory bus interface, a processor bus interface, an Internet connection, a disk controller, etc. The communication interface can be configured by providing configuration parameters and/or sending signals to prepare the communication interface to provide a data signal describing the software content. The communication interface can be accessed via one or more commands or signals sent to the communication interface.

Various components described herein can be a means for performing the operations or functions described. Each component described herein includes software, hardware, or a combination of these. The components can be implemented as software modules, hardware modules, special-purpose hardware (e.g., application specific hardware, application specific integrated circuits (ASICs), digital signal processors (DSPs), etc.), embedded controllers, hardwired circuitry, etc.

Besides what is described herein, various modifications can be made to what is disclosed and implementations of the invention without departing from their scope. Therefore, the illustrations and examples herein should be construed in an illustrative, and not a restrictive sense. The scope of the invention should be measured solely by reference to the claims that follow.

## Claims

1. A method for memory access, comprising:
receiving a host key at a memory device from a memory controller over a command/address (CA) bus;
receiving a read command to read a memory key from the memory device;
sending the memory key to the memory controller; and
establishing a trusted communication channel between the memory device and the memory controller if there is a match between the memory key and the host key, wherein the memory controller can access a memory array of the memory device only after establishment of the trusted communication channel, wherein the memory array is to store system data.

2. The method of claim 1, wherein the trusted communication channel comprises a secured communication channel in conjunction with communication over a data bus.

3. The method of claim 2, wherein the secured communication channel comprises encrypted data.

4. The method of claim 2, wherein the secured communication channel comprises scrambled data.

5. The method of claim 2, wherein the communication in conjunction with communication over the data bus comprises data sent over the data bus during additional unit intervals (UIs) of a burst length.

6. The method of claim 2, wherein the communication in conjunction with communication over the data bus comprises data sent over a signal line in addition to signal lines of the data bus.

7. The method of any of claims 1 to 6, wherein the system data comprises on die error correction coding (ODECC) data.

8. The method of any of claims 1 to 7, wherein the system data comprises row hammer data.

9. The method of any of claims 1 to 8, wherein the system data comprises system metadata.

10. A memory device comprising means for performing a method in accordance with any of claims 1 to 9.

11. A memory controller comprising:
a hardware interface to a data bus to couple to a memory device; and
a key storage to store a certificate, wherein the memory controller is to establish a trusted communication channel with the memory device based on the certificate, wherein the memory controller can access a memory array of the memory device only after establishment of the trusted communication channel, wherein the memory array is to store system data.

12. The memory controller of claim 11, wherein the trusted communication channel comprises a secured communication channel in conjunction with communication over a data bus.

13. The memory controller of claim 12, wherein the secured communication channel comprises either encrypted data or scrambled data.

14. The memory controller of claim 12, wherein the communication in conjunction with communication over the data bus comprises data sent over the data bus during additional unit intervals (UIs) of a burst length or data sent over a signal line in addition to signal lines of the data bus.

15. The memory controller of claim 11, wherein the system data comprises on die error correction coding (ODECC) data, row hammer data, or system metadata.
